(19) Europäisches Patentamt
European Patent Office
Office européen des brevets

(11) **EP 2 920 652 B1**

(12) **FASCICULE DE BREVET EUROPEEN**

(45) Date de publication et mention de la délivrance du brevet:
**04.01.2017 Bulletin 2017/01**

(21) Numéro de dépôt: **13802549.9**

(22) Date de dépôt: **15.11.2013**

(51) Int Cl.:
*G03H 1/08* (2006.01)        *G01H 9/00* (2006.01)
*G03H 1/04* (2006.01)

(86) Numéro de dépôt international:
**PCT/EP2013/073978**

(87) Numéro de publication internationale:
**WO 2014/076251 (22.05.2014 Gazette 2014/21)**

(54) **HOLOGRAPHIE HÉTÉRODYNE NUMÉRIQUE HORS-AXE**

AUSSERAXIALE DIGITALE HETERODYNE HOLOGRAFIE

DIGITAL OFF-AXIS HETERODYNE HOLOGRAPHY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.11.2012 FR 1260883**

(43) Date de publication de la demande:
**23.09.2015 Bulletin 2015/39**

(73) Titulaire: **Centre National de la Recherche Scientifique (C.N.R.S.)**
**75794 Paris Cedex 16 (FR)**

(72) Inventeurs:
• **ATLAN, Michael**
  **F-75019 Paris (FR)**
• **SAMSON, Benjamin**
  **F-75018 Paris (FR)**

(74) Mandataire: **Osha Liang**
**2, rue de la Paix**
**75002 Paris (FR)**

(56) Documents cités:
• **PAVEL PSOTA ET AL: "Measurement of piezoelectric transformer vibrations by digital holography", IEEE TRANSACTIONS ON ULTRASONICS, FERROELECTRICS AND FREQUENCY CONTROL, IEEE, US, vol. 59, no. 9, 1 septembre 2012 (2012-09-01), pages 1962-1968, XP011463273, ISSN: 0885-3010, DOI: 10.1109/TUFFC.2012.2414**
• **BENJAMIN SAMSON ET AL: "Video-rate laser Doppler vibrometry by heterodyne holography", OPTICS LETTERS, THE OPTICAL SOCIETY, vol. 36, no. 8, 15 avril 2011 (2011-04-15) , pages 1449-1451, XP001561698, ISSN: 0146-9592, DOI: 10.1364/OL.36.001449 [extrait le 2011-04-14]**
• **VÍT LÉDL ET AL: "Frequency Shifted Digital Holography for the Measurement of Vibration with Very Small Amplitudes", AIP CONFERENCE PROCEEDINGS, 1 janvier 2010 (2010-01-01), pages 415-419, XP055075667, ISSN: 0094-243X, DOI: 10.1063/1.3455485 cité dans la demande**
• **ATLAN ET AL: "High-speed wave-mixing laser Doppler imaging in vivo", OPTICS LETTERS,, vol. 33, no. 8, 15 avril 2008 (2008-04-15) , pages 842-844, XP002553071, DOI: 10.1364/OL.33.000842**
• **NICOLAS VERRIER ET AL: 'Absolute measurement of small-amplitude vibrations by time-averaged heterodyne holography with a dual local oscillator' OPTICS LETTERS vol. 38, no. 5, 01 Mars 2013, pages 739 - 741, XP055075583 DOI: 10.1364/OL.38.000739 ISSN: 0146-9592**

## Description

### Domaine technique de l'invention

La présente invention concerne un dispositif et une méthode d'holographie hétérodyne numérique hors-axe, notamment pour la mesure de vibrations mécaniques d'amplitudes nanométriques.

### Etat de l'art

L'holographie est une méthode qui permet de reconstruire une image en trois dimensions (3D) d'un objet à partir de l'enregistrement d'une figure d'interférence entre deux ondes cohérentes, une onde de référence et une onde diffusée par l'objet à observer. Dans le cas de l'holographie classique, l'enregistrement est effectué sur une plaque photographique. Une fois la plaque développée par des procédées connus de photographie, on obtient un hologramme. L'image 3D est reconstruite en éclairant l'hologramme avec l'onde de référence qui produit alors une onde transmise directement (ordre 0) et deux ondes de lumière diffractées, une onde objet (ou onde signal) qui reconstitue une image virtuelle de l'objet et une onde conjuguée qui forme une image réelle parasite qui gène l'observation de l'image virtuelle et que l'on cherche à supprimer. En holographie classique, l'utilisation par exemple d'un matériau épais pour l'émulsion photographique utilisée pour l'enregistrement de l'hologramme permet de créer un hologramme de volume qui, lors de la restitution, ne va diffracter que l'onde signal recherchée. On obtient ainsi des images de très grande qualité. Cependant, en holographie classique, les informations quantitatives enregistrées (amplitude et phase de l'onde signal) ne sont pas accessibles directement, ce qui en limite les applications.

Afin de disposer d'informations quantitatives exploitables, une nouvelle technique d'holographie est apparue, appelée holographie numérique, dans laquelle le film photographique est remplacé par un détecteur optoélectronique bidimensionnel, par exemple une caméra CCD. L'acquisition du signal d'interférence par le détecteur permet de former un interférogramme, c'est-à-dire une figure d'interférence échantillonnée sur le détecteur bidimensionnel. Le procédé de reconstruction, entièrement numérique, consiste à calculer à partir de l'interférogramme le champ de l'onde diffractée dans un plan de l'objet, par exemple au moyen d'une transformée de Fresnel, qui peut, par exemple, comprendre un algorithme de transformées de Fourier rapides (FFT selon l'abréviation de l'expression anglo-saxonne « Fast Fourrier Transform »). Un exemple d'holographie numérique est exposé dans Schnars et Jüptner, « Direct recording of holograms by a CCD target and numerical reconstruction», Appl. Opt. 33, p. 179-181 (1994). L'holographie numérique présente de nombreux avantages par rapport à l'holographie classique, du fait notamment que le champ reconstruit de l'onde signal est une fonction complexe permettant d'accéder à l'amplitude et à la phase de l'onde signal. Il est ainsi possible d'établir la cartographie tridimensionnelle d'un objet, l'étude d'objets en mouvement et notamment l'étude d'un objet en vibration. Cependant, de la même façon qu'en holographie classique sur film mince, le champ de l'onde signal calculé à partir de l'interférogramme comprend simultanément l'ordre diffractif recherché, l'ordre 0 et l'ordre conjugué parasite. Il y a donc une incertitude sur l'amplitude complexe de l'onde objet que l'on cherche à déterminer.

Un moyen pour supprimer l'image conjuguée parasite et l'onde non-diffractée est d'introduire un déphasage entre l'onde de référence et l'onde signal. Dans la demande EP 1 043 632 par exemple, une technique dite d'holographie hétérodyne numérique est décrite, notamment pour l'application à l'étude d'objets en vibration. Selon cette technique, la fréquence de l'onde de référence est décalée d'une quantité déterminée en fonction de la fréquence de vibration de l'objet et de la cadence d'acquisition du détecteur, par exemple au moyen de deux modulateurs acousto-optiques. Une démodulation numérique de l'interférogramme permet alors de supprimer les composantes dues à l'ordre 0 et à l'ordre conjuguée.

Pour gagner encore en précision, il a été proposé (voir par exemple M. Gross et al., « Digital Holography with ultimate sensibility », Optics Letters, Vol. 32, (2007)), de combiner la technique d'holographie hétérodyne numérique avec une technique d'holographie hors-axe, dans laquelle un angle (typiquement quelques degrés) est introduit entre l'onde de référence et l'onde diffusée par l'objet. Couplée avec un filtrage spatial numérique, cette technique permet de filtrer l'onde transmise à l'ordre zéro ainsi que le bruit qui lui est attaché. Il est alors possible d'enregistrer et de reconstruire des images holographiques avec un meilleur rapport signal sur bruit, permettant la mesure de vibrations de très faible amplitude, à cadence d'acquisition vidéo. Dans l'article de V. Lédl et al. (« Frequency Shifted Digital Holography for the Measurement of Vibration with

Very Small Amplitudes », 9th International Conference on Vibration Measurements by Laser and Noncontact Techniques, juin 2010), des mesures d'amplitudes de vibration de l'ordre du nanomètre ont ainsi été réalisées expérimentalement, en utilisant un montage d'holographie hétérodyne hors-axe. Voir aussi les documents de l'art antérieur : B. Samson et al. (« Video-rate laser Doppler vibrometry by hétérodyne holography », optics letters, vol. 26, no. 8 (2011-04-15), pages 1149 - 1151) et P. Psota et al. ("Measurement of Piezoelectric Transformer Vibrations by Digital Holography", IEEE transactions on ultrasonics, ferroelectrics and frequency control, vol. 59, no. 9, sept 2012).L'invention propose une méthode et un dispositif d'holographie hétérodyne hors-axe permettant, par rapport aux technologies connues, d'accéder à des rapports signal sur bruit supérieurs et de gagner de ce fait en précision de mesure, notamment sur les amplitudes de vibration inférieures au nanomètre.

RESUME DE L'INVENTION

Selon un premier aspect, l'invention concerne une méthode d'holographie numérique pour détecter l'amplitude $z$ de vibration d'un objet à au moins une fréquence de vibration $\omega$, comprenant :

- la génération d'une onde laser de fréquence $\omega_L$ d'illumination de l'objet et d'une onde de référence cohérente avec l'onde d'illumination (c'est-à-dire présentant une relation de phase non aléatoire avec l'onde d'illumination);
- l'acquisition au moyen d'un détecteur optoélectronique bidimensionnel de bande passante temporelle $\omega_s$ d'une série d'interférogrammes résultant de l'interférence de l'onde de référence et d'une onde signal issue de l'objet, les ondes signal et de référence présentant un décalage angulaire, le champ de l'onde de référence comprenant une première composante de fréquence $\omega_1$ et au moins une deuxième composante de fréquence $\omega_2$, les fréquences $\omega_1$ et $\omega_2$ étant décalées de la fréquence $\omega_L$ de l'onde laser respectivement d'une quantité déterminée $\delta_1$, $\delta_2$, avec $\delta_1 = \gamma_1 \omega s$ et $\delta_2 = q\omega + \gamma_2\omega_s$, où $q$ entier relatif et $-0,5 \leq \gamma_1$, $\gamma_2 \leq 0,5$ ; et
- le traitement des interférogrammes comprenant :
- le calcul d'un hologramme de l'objet à partir de chaque interférogramme, l'hologramme étant défini par l'amplitude complexe de l'onde signal dans un champ spatial donné d'un plan de l'objet ;
- le calcul de la transformée de Fourier temps- fréquence des amplitudes complexes desdits hologrammes, permettant d'obtenir en chaque point du champ spatial un spectre en fréquence des battements optiques entre les composantes fréquentielles de l'onde de référence et de l'onde signal, le spectre de battements optiques comprenant au moins deux raies pour des fréquences égales aux décalages de fréquence $\delta_1$ et $\delta_2$ ; et
- le calcul pour chaque point du champ spatial à partir du rapport des amplitudes de la première raie et de la deuxième raie, de l'amplitude z de la vibration de l'objet.

La déposante a montré que grâce à la méthode ainsi décrite, un rapport signal sur bruit nettement amélioré des mesures d'amplitudes de vibration pouvait être obtenu, notamment grâce à la mesure simultanée des raies du spectre en fréquence des hologrammes. De très bons résultats sont obtenus en travaillant sur l'une des premières bandes de modulation de l'onde signal ($q = \pm 1$) et avec une onde de référence présentant deux composantes décalées en fréquence. Il est également possible d'augmenter le rapport signal sur bruit en augmentant le nombre de composantes de l'onde de référence. En travaillant sur des bandes de modulation d'ordre plus élevé, il est également possible d'accéder à des amplitudes de vibration plus grandes.

De façon générale, $\gamma_1$ et $\gamma_2$ peuvent s'écrire respectivement $p_1/N - 1/2$ et $p_2/N - 1/2$ où $N$ est le nombre d'interférogrammes dans une série d'interférogrammes acquis par le détecteur optoélectronique bidimensionnel et $p_{1,2} = 1,...$ N. Selon une variante, $\gamma_1$ et $\gamma_2$ sont de normes différentes pour éviter des effets de diaphonie (ou « cross-talk » selon l'expression anglo-saxonne) sur le spectre en fréquence des battements optiques entre les composantes fréquentielles de l'onde de référence et de l'onde signal.

Par exemple, l'onde de référence pourra comprendre au moins une troisième composante $E_{LO3}$ de fréquence $\omega_3$, la fréquence $\omega_3$ étant décalée de la fréquence $\omega_1$ de l'onde laser d'une quantité déterminée $\delta_3 = \gamma_3\omega_s + q\omega$, où $q$ entier relatif et $-0,5 \leq \gamma_3 \leq 0,5$. Dans ce cas, le spectre de battements optiques entre les composantes fréquentielles de l'onde de référence et de l'onde signal comprend trois raies pour des fréquences égales aux décalages de fréquence $\delta_1$, $\delta_2$ et $\delta_3$ et le calcul pour chaque point du champ spatial de l'amplitude z de la vibration de l'objet pourra être effectué à partir du rapport des amplitudes de la première raie et de la deuxième raie et du rapport des amplitudes de la première raie et de la troisième raie.

Selon une variante, la méthode comprend l'émission d'une onde laser de fréquence $\omega_L$ et la séparation de l'onde d'émission laser pour former l'onde d'illumination de l'objet et une deuxième onde envoyée vers un dispositif optoélectronique de décalage de fréquence optique pour former l'onde de référence, permettant ainsi de former des ondes d'illumination et de référence cohérentes entre elles.

Selon une variante, la vibration de l'objet peut résulter de l'excitation forcée de l'objet à ladite fréquence $\omega$. Il est alors possible grâce à la méthode ainsi décrite, de déterminer, en plus de l'amplitude de vibration, le retard de phase entre la phase de vibration de l'objet et la phase du signal d'excitation, et ceci à partir du rapport des amplitudes de la première raie et de la deuxième raie du spectre en fréquence des battements optiques entre les composantes fréquentielles de l'onde de référence et de l'onde signal.

Selon une variante, dans le cas d'une excitation forcée de l'objet, la fréquence d'excitation est variable temporellement de façon continue entre une fréquence d'excitation inférieure $\omega_I$ et une fréquence d'excitation supérieure $\omega_F$ pendant une durée (T) donnée, l'acquisition et le traitement des interférogrammes étant effectuées pendant ladite durée. La variation de la fréquence d'excitation est par exemple linéaire entre les valeurs inférieure et supérieure. Cette variation continue de la fréquence d'excitation, simultanément à une variation d'une des fréquences de décalage de l'onde de référence, permet un verrouillage du retard de phase de la vibration par rapport à l'excitation, permettant une mesure plus précise du retard de phase.

Alternativement, la méthode peut s'appliquer aussi dans le cas d'un objet présentant un spectre de fréquences de vibrations. L'acquisition et le traitement des interférogrammes sont alors effectués pour obtenir l'amplitude *z* de vibration de l'objet à au moins une fréquence de vibration $\omega$ contenue dans le spectre. Cette méthode permet alors d'établir par exemple des cartographies d'objets en vibration et la détermination des points résonants, notamment dans le cadre de la vibrométrie laser pour le contrôle non destructif

Selon un deuxième aspect, l'invention concerne un dispositif d'holographie numérique pour détecter l'amplitude *z* de vibration d'un objet à une fréquence de vibration $\omega$, comprenant :

- un détecteur optoélectronique bidimensionnel de bande passante temporelle $\omega_s$;
- des moyens de génération de deux ondes laser cohérentes entre elles, une onde laser d'illumination de l'objet de fréquence $\omega_L$ et une onde de référence, le champ de l'onde de référence présentant au moins une première et une deuxième composantes de fréquences $\omega_1$, $\omega_2$ décalées de la fréquence $\omega_L$ de l'onde laser respectivement d'une quantité déterminée $\delta_1$, $\delta_2$, avec $\delta_1 = \gamma_1\omega_s$ et $\delta_2 = q\omega + \gamma_2\omega_s$, où q entier relatif et $- 0,5 \le \gamma_1, \gamma_2 \le 0,5$;
- des moyens de combinaison de l'onde de référence et d'une onde signal issue de l'objet sur le détecteur optoélectronique bidimensionnel, les ondes de référence et signal présentant un décalage angulaire, l'acquisition du signal d'interférence des ondes signal et de référence par le détecteur optoélectronique bidimensionnel résultant en une série d'interférogrammes; et
- des moyens de traitement des interférogrammes comprenant :
  - des moyens de calcul d'hologrammes de l'objet obtenus à partir de chacun des interférogrammes, un hologramme étant défini par l'amplitude complexe de l'onde signal dans un champ spatial donné d'un plan de l'objet;
  - des moyens pour calculer la transformée de Fourier temps - fréquence des amplitudes complexes desdits hologrammes, permettant d'obtenir en chaque point du champ spatial un spectre en fréquence des battements optiques entre les composantes fréquentielles de l'onde de référence et de l'onde signal, le spectre de battements optiques comprenant au moins deux raies pour des fréquences égales aux décalages de fréquence $\delta_1$ et $\delta_2$ ; et
  - des moyens pour calculer en chaque point du champ spatial à partir des amplitudes de la première raie et de la deuxième raie l'amplitude *z* de la vibration de l'objet.

Selon une variante, le dispositif comprend une source d'émission laser à la fréquence $\omega_L$, des moyens de séparation de l'onde d'émission laser pour former l'onde d'illumination de l'objet et une seconde onde et un dispositif optoélectronique de décalage de fréquence optique, destiné à recevoir ladite seconde onde pour former l'onde de référence.

Selon une variante, les moyens de séparation de l'onde laser sont fibrés.

Par exemple, le dispositif optoélectronique de décalage de fréquence optique comprend deux modulateurs acousto-optiques travaillant à des fréquences prédéterminées sur des ordres de diffraction opposés pour former ladite onde de référence.

Alternativement, le dispositif optoélectronique de décalage de fréquence optique comprend une cellule de Pockels. La cellule de Pockels présente l'avantage d'être moins coûteuse que des modulateurs acousto-optiques et de ne pas nécessiter d'électronique complexe.

Selon une variante, le dispositif comprend en outre un moyen d'excitation de l'objet à la fréquence $\omega$ de vibration donnée.

Selon une variante, le détecteur optoélectronique bidimensionnel est une caméra de type CCD ou CMOS.

BREVE DESCRIPTION DES DESSINS

D'autres avantages et caractéristiques de l'invention apparaîtront à la lecture de la description, illustrée par les figures suivantes qui représentent :

- la figure 1, un schéma d'un exemple de dispositif d'holographie numérique selon l'invention ;
- les figures 2A à 2C, des schémas illustrant des étapes de traitement des interférogrammes dans un exemple de méthode d'holographie numérique selon l'invention ;
- les figures 3A à 3C, des diagrammes montrant dans un exemple de mise en oeuvre des mesures de spectres en fréquence du champ de l'onde signal (Figure 3A), du champ de l'onde de référence (Figure 3B) et des battements optiques entre les spectres en fréquence des champs de l'onde signal et de référence (Figure 3C), obtenus par la méthode d'holographie numérique selon l'invention ;
- la figure 4, un diagramme montrant des courbes comparatives de mesures d'amplitude z de vibration d'un objet, effectuées respectivement à l'aide de la méthode selon l'invention et selon une méthode de l'art antérieur;

- la figure 5, un schéma illustrant un exemple particulier de réalisation d'un dispositif selon l'invention ;
- les figures 6A à 6D, des hologrammes d'un objet obtenus avec le dispositif de l'exemple de la figure 5 ;
- la figure 7, un diagramme représentant, en fonction de la fréquence d'excitation de l'objet, l'amplitude mesurée de vibration en un point donné de l'objet ; et
- les figures 8A et 8B, des diagrammes représentant, en fonction de la fréquence d'excitation de l'objet, respectivement l'amplitude de vibration et la phase, les courbes mesurées étant comparées aux courbes théoriques.

## DESCRIPTION DETAILLEE

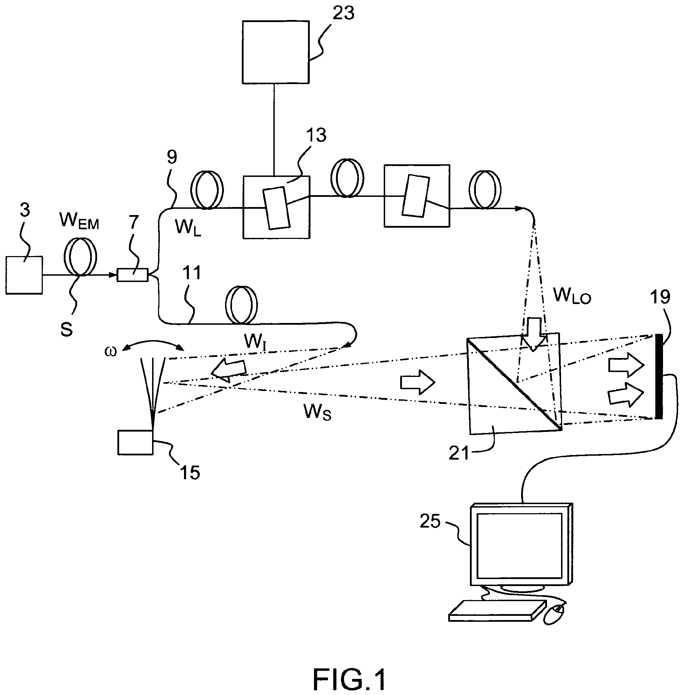

La figure 1 illustre un schéma d'un exemple de dispositif d'holographie numérique selon l'invention. Dans cet exemple, le dispositif est fibré. Le dispositif permet l'enregistrement et le traitement d'interférogrammes d'un objet présentant au moins une fréquence de vibration $\omega$ afin d'en déterminer l'amplitude et/ou la phase de vibration. Dans la suite de la demande, on parlera simplement de « fréquence de vibration » $\omega$ pour exprimer la fréquence angulaire (ou pulsation). La phase de vibration est plus précisément définie, dans le cas d'un objet soumis à une excitation forcée sinusoïdale, par le retard de phase par rapport à la phase d'excitation. La capacité à mesurer des amplitudes de vibration de très faibles amplitudes d'un objet ainsi que la phase de la vibration de l'objet soumis à une vibration forcée peuvent permettre de donner des informations très fines sur la nature de l'objet, telles que son intégrité mécanique, sa qualité et, le cas échéant, son état d'endommagement. Pour cela, le dispositif selon l'invention comprend des moyens 3, 7 de génération de deux ondes cohérentes entre elles, une onde d'illumination de l'objet $W_1$ et une onde de référence $W_{LO}$. Autrement dit, l'onde d'illumination $W_I$ et l'onde de référence $W_{LO}$ présentent une relation de phase avec l'onde d'illumination non aléatoire entre elles. Le dispositif comprend en outre un détecteur bidimensionnel 19 de bande passante temporelle $\omega_s$. Avantageusement, les moyens de génération du dispositif selon l'invention comprennent une source 3 cohérente temporellement, par exemple une source laser, émettant une onde d'émission $W_{EM}$ ayant une fréquence optique $\omega_L$. La source laser est, par exemple, une diode laser émettant à une longueur d'onde d'émission dans la bande spectrale visible ou proche infrarouge, par exemple une diode laser fibrée. Les moyens de génération du dispositif selon l'invention comprennent en outre un séparateur de faisceaux 7, permettant de former, à partir de l'onde d'émission $W_{EM}$, l'onde d'illumination de l'objet $W_I$ et une seconde onde $W_L$, ayant chacune la fréquence optique $\omega_L$. Dans l'exemple de la figure 1, le séparateur de faisceaux 7 comprend un coupleur à fibres, permettant de coupler l'onde d'émission $W_{EM}$ issue d'une fibre optique 5 de sortie de la source d'émission 3 dans deux fibres optiques 9, 11 afin de former l'onde d'illumination $W_I$ et la seconde onde $W_L$. L'onde d'illumination $W_I$ éclaire l'objet 15 que l'on souhaite examiner, soit en réflexion, soit en transmission. L'onde issue de l'objet, rétrodiffusée ou transmise, est appelée onde signal dans la suite de la demande et désignée $W_s$ sur la figure 1.

La vibration de l'objet 15 résultant par exemple d'une excitation forcée de l'objet à la fréquence $\omega$ entraine une modulation de la phase $\phi(t)$ de la partie temporelle du champ $E$ de l'onde signal $W_s$ due à la variation du chemin optique entre l'objet 15 en vibration et le détecteur 19. Ceci conduit à l'apparition de bandes latérales optiques d'amplitudes complexes $\varepsilon_n$ aux harmoniques de la fréquence de vibration $\omega$ de l'objet. La modulation de la phase $\phi(t)$ en fonction du temps $t$ peut avoir la forme $\phi(t) = \phi_0 \sin(\omega t + \psi)$, où $\phi_0 = 4\pi z/\lambda$. est l'amplitude de modulation, exprimée en fonction de l'amplitude de vibration $z$ de l'objet et de la longueur d'onde $\lambda$ de l'onde d'émission $W_{EM}$, et $\psi$ est le retard de phase mécanique du signal de vibration par rapport au signal d'excitation. Ainsi, le champ optique $E$ de l'onde signal $W_S$ peut s'écrire de la façon $E = \sum_n E_n$, avec $E_n = \varepsilon_n e^{i(\omega_L + n\omega)t}$ et $n$ entier relatif, $n \in [-\infty, \infty]$. Les quantités $\varepsilon_n = \varepsilon J_n(\phi_0)e^{in\psi}$ sont les amplitudes complexes des composantes fréquentielles d'ordre $n$ de l'onde signal, avec $\varepsilon$ l'amplitude complexe du champ optique de l'onde signal et $J_n$ les fonctions de Bessel de première espèce. On parle de composante non décalée $E_0$ du champ $E$ de l'onde signal pour $n = 0$ et de bandes latérales pour les composantes $E_n$ du champ $E$ de l'onde signal, où $n = 1, -1, 2, -2$, etc. Il est alors possible de déduire des amplitudes complexes des composantes fréquentielles d'ordre 0 et 1 de l'onde signal, l'amplitude de vibration $z$ de l'objet et le retard de phase $\psi$ par l'équation :

$$\frac{\varepsilon_1}{\varepsilon_0} \approx \frac{2\pi}{\lambda} z e^{i\psi} . \qquad (1)$$

L'équation (1) est valable pour des amplitudes de vibration très inférieures à la longueur d'onde $\lambda$ de l'onde d'émission.
Il en résulte notamment une expression de l'amplitude de vibration $z$ de l'objet en fonction de l'amplitude relative de la première bande par rapport à la composante non décalée selon l'équation :

$$z \approx \frac{\lambda}{2\pi} \frac{|\varepsilon_1|}{|\varepsilon_0|} \qquad (2)$$

Dans l'exemple illustré sur la figure 1, les moyens de génération des ondes d'illumination de l'objet et de référence comprennent en outre un dispositif optoélectronique de décalage de fréquence 13, destiné à recevoir la seconde onde $W_L$ afin d'en décaler la fréquence optique $\omega_L$ pour former l'onde de référence $W_{LO}$ et un moyen de contrôle 23 du dispositif optoélectronique de décalage de fréquence 13. L'onde de référence $W_{LO}$ décalée en fréquence est appelée oscillateur local dans la suite de la description. Le décalage de la fréquence $\omega_L$ de l'onde de référence permet une démodulation numérique des interférogrammes à une fréquence de démodulation contenue dans la bande passante temporelle $\omega_s$ du détecteur optoélectronique, qui correspond à sa cadence d'acquisition. Selon la présente invention, l'oscillateur local, ou onde de référence, présente une première fréquence $\omega_1$ et au moins une deuxième fréquence $\omega_2$, les fréquences étant décalées de la fréquence d'émission $\omega_L$ d'une quantité déterminée $\delta_j$, $j = 1 \ldots m$, de telle sorte à ce que lors de la démodulation des interférogrammes, la composante non décalée du champ de l'onde signal et les bandes latérales utiles pour la détermination de l'amplitude de vibration z de l'objet soient contenues dans la bande passante $\omega_s$ de la caméra. Ainsi, le champ de l'oscillateur local peut s'écrire $E_{LO} = \sum_j E_{LOj} \ldots$, où $E_{LOj}$ est la composante $j = 1 \ldots m$ ayant la forme $E_{LOj} = \varepsilon_{LOj} e^{i\omega_L t} e^{i\delta_j t}$, avec $\delta j$ le décalage de fréquence. Comme cela sera expliqué plus en détails par la suite, la déposante a montré qu'un oscillateur local à deux fréquences ($m = 2$), appelée dans la suite de la description « oscillateur local dual », permet d'obtenir un rapport signal sur bruit nettement meilleur pour la mesure de l'amplitude de vibration ou du retard de phase que ceux obtenus dans l'art antérieur et donc d'atteindre notamment des mesures d'amplitudes de vibration très faibles. En choisissant pour l'oscillateur local un nombre supérieur de fréquences de décalage ($m > 2$), on peut augmenter encore le rapport signal sur bruit. Par exemple, dans le cas d'un oscillateur local dual, les fréquences décalées de l'onde de référence $W_{LO}$ pourront être données par $\omega_1 = \omega_L + \delta_1$ et $\omega_2 = \omega_L + \delta_2$, avec $\delta_1 = \gamma_1 \omega_s$ et $\delta_2 = q\omega + \gamma_2 \omega_s$, où q entier relatif et $- 0,5 \leq \gamma_1, \gamma_2 \leq 0,5$.

Selon une variante, on choisit $\gamma_1, \gamma_2$ de normes différentes pour éviter des effets de diaphonie (ou « cross-talk » selon l'expression anglo-saxonne) sur le spectre en fréquence des battements optiques entre l'onde de référence et l'onde signal.

Selon une variante, le dispositif optoélectronique de décalage de fréquence 13 peut comprendre deux modulateurs acousto-optiques (AOM) fonctionnant à des fréquences déterminées sur des ordres de diffraction opposés pour obtenir les fréquences décalées de l'onde de référence. Le moyen de contrôle 23 peut comprendre un synthétiseur numérique permettant de programmer les fréquences synthétisées des signaux de commande des AOM. Les fréquences de décalage peuvent ainsi facilement être adaptées à la fréquence de vibration $\omega$ de l'objet.

Selon une variante, le dispositif optoélectronique de décalage de fréquence 13 peut comprendre une cellule de Pockels, permettant la génération de l'oscillateur local aux fréquences recherchées. Plus précisément, la cellule de Pockels est commandée par un signal destiné à créer au moins deux fréquences de décalage de l'onde de référence $W_{LO}$. Ce signal peut par exemple être un balayage linéaire de tension de commande avec le temps, dont la pente commute séquentiellement entre deux valeurs au moins une fois pendant le temps d'acquisition d'une image, les deux pentes étant les deux décalages de fréquence $\delta_1$ et $\delta_2$ de l'oscillateur local dual.

L'interférence entre l'onde de référence ou oscillateur local $W_{LO}$ et l'onde signal $W_S$, recombinées à l'aide d'un moyen de combinaison 21, par exemple un cube séparateur, mène à des figures d'interférence qui sont acquises par le détecteur bidimensionnel 19. Le moyen de combinaison 21 est arrangé de manière à ce que les deux ondes interfèrent avec un angle $\theta$ de l'ordre du degré. Ce montage hors-axe permet, lors du traitement des interférogrammes enregistrés, d'effectuer un filtrage spatial dans le domaine des fréquences spatiales k afin de supprimer l'image parasite conjuguée et l'ordre 0 qui apparaissent lors de la reconstruction des hologrammes. Grâce aux choix des fréquences de l'oscillateur local, l'interférence entre l'onde signal et l'onde de référence donne lieu à des battements optiques à des fréquences comprises dans la bande passante temporelle $\omega_s$ du détecteur 19.

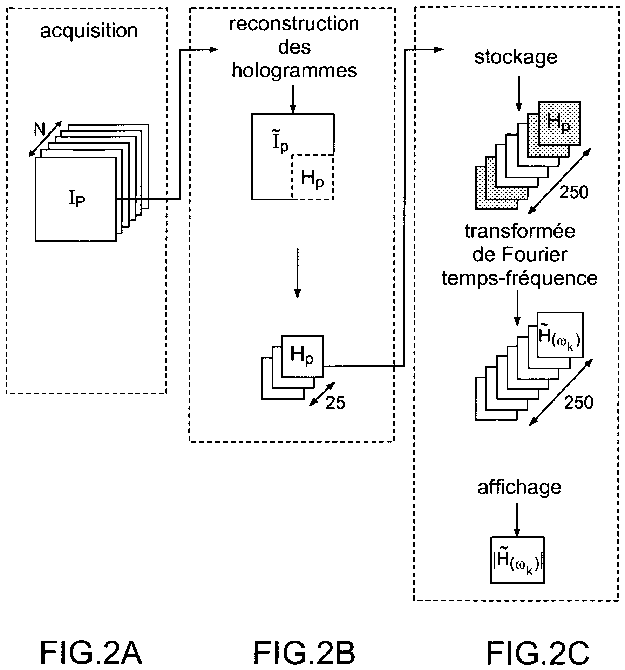

Le dispositif d'holographie numérique selon l'invention comprend également des moyens de traitement 25 des interférogrammes enregistrés par le détecteur bidimensionnel 19. Les figures 2A à 2C illustrent schématiquement les étapes mises en oeuvre pour le calcul des hologrammes de l'objet, permettant ensuite d'accéder à l'amplitude z et/ou à la phase $\psi$ de vibration de l'objet. Un nombre N d'interférogrammes $I_p$ est enregistré par intervalle de temps par le détecteur bidimensionnel, comme illustré par la figure 2A. Par exemple, 256 images sont acquises à une fréquence $\omega_s/(2\pi) = 20$ Hz. Les fréquences décalées de l'onde de référence sont choisies telles que $\gamma_1$ et $\gamma_2$ soient égaux respectivement à $p1/N - 1/2$ et $p_2/N - 1/2$ où $p_{1,2} = 1, \ldots N$. Les moyens de traitement permettent alors de calculer lors d'une étape de reconstruction un hologramme de l'objet à partir de chaque interférogramme enregistré. Un interférogramme enregistré par le détecteur a la forme

$$I_p = \left| \sum_n E_n + \sum_j E_{LOj} \right|^2. \qquad (3)$$

La reconstruction de l'hologramme est faite par exemple de façon connue par transformée de Fresnel de l'interférogramme $I_p$, permettant d'obtenir pour chaque interférogramme un hologramme à valeurs complexes $\tilde{I}_p =$ Fresnel $\{I_p\}$ dans un champ spatial donné d'un plan de l'objet. Chaque hologramme est ainsi défini par l'amplitude complexe de l'onde signal dans le champ spatial donné de l'objet. De manière avantageuse, seulement une partie décentrée $H_p$ (dite hors-axe) des images $\tilde{I}_p$ est conservée dans la suite, comme illustré sur la figure 2B, les hologrammes hors-axe $H_p$ étant obtenus par filtrage numérique dans l'espace des fréquences spatiales, pour ne garder que l'ordre de diffraction utile lors de la reconstruction.

Les hologrammes $Hp$ sont stockés (figure 2C) puis une transformée de Fourier temps - fréquence des amplitudes complexes des hologrammes $H_p$ est calculée, pour chaque point du champ, afin d'obtenir le spectre en fréquence $\tilde{H} = FT\{H\}$, montré schématiquement sur la figure 2C. La composante $k$ de la transformée de Fourier peut être écrite comme suit :

$$\tilde{H}(\omega_k) = \sum_{p=1}^{N} H_p \exp(-2ipk\pi / N) \qquad (4)$$

On obtient ainsi un spectre $|\tilde{H}(\omega_k)|$ en fréquence des battements optiques entre les composantes fréquentielles de l'onde de référence $W_{LO}$ et de l'onde signal $W_S$ pour chaque point du champ. On montre que chaque composante $\tilde{H}(\omega_k = \gamma_k \omega_s)$ peut s'écrire :

$$\tilde{H}(\omega_k = \gamma_k \omega_s) = K\, \varepsilon_{k-1}\, \varepsilon^*{}_{LOk}, \qquad (5)$$

où $K$ est une constante. Par exemple dans le cas de l'oscillateur local dual, $\tilde{H}(\gamma_1 \omega_s) = K\varepsilon_0 \varepsilon^* L_{O1}$ et $\tilde{H}(\gamma_2 \omega_s) = K\, \varepsilon_1 \varepsilon^*{}_{LO2}$.

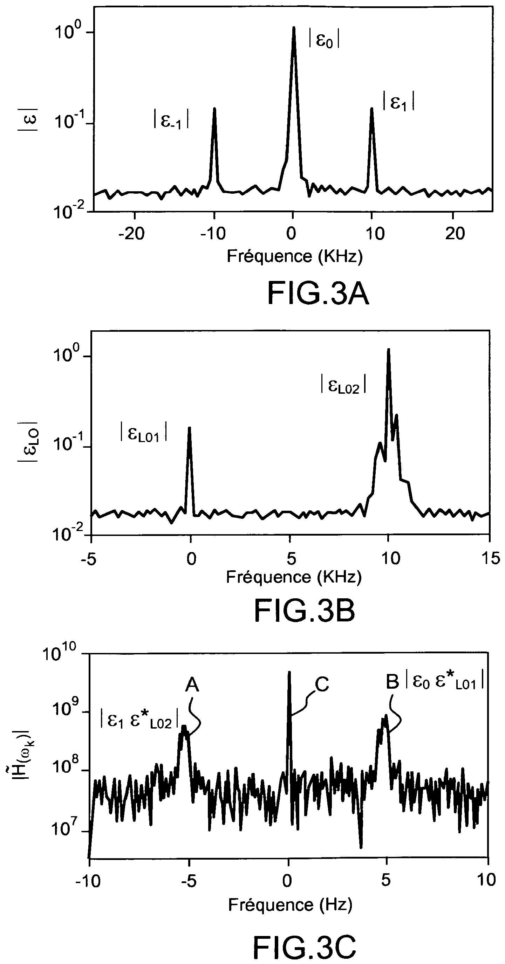

Les figures 3A à 3C montrent des diagrammes représentant des spectres fréquentiels mesurés de l'amplitude $E$ du champ de l'onde signal $W_s$ (figure 3A), de l'amplitude $E_{LO}$ du champ de l'onde de référence $W_{LO}$ (figure 3B) et des battements optiques entre les composantes fréquentielles de l'onde de référence $W_{LO}$ et de l'onde signal $W_S$ pour un point donné du champ (figure 3C) dans un exemple de mise en oeuvre.

Dans cet exemple, l'oscillateur local est dual et comprend deux fréquences de décalage $\omega_1 = \omega_L + \omega_s/4$ et $\omega_2 = w_L + \omega - \omega_s/4$ obtenus par exemple au moyen de deux modulateurs acousto-optiques dont l'un fonctionne à la fréquence porteuse $\omega_C$, et le deuxième fonctionne aux fréquences $\omega_C - \omega_s/4$ et $\omega_C + \omega + \omega_s/4$. Les modulateurs acousto-optiques sont par exemple des cellules Bragg fonctionnant à la fréquence porteuse $\omega_c/(2\pi) = 80$ MHz. La source d'émission est une diode laser fonctionnant à 532 nm. Les ondes signal et de référence sont combinés sur le détecteur avec un angle de quelques dégrés. Le détecteur est une caméra CCD de fréquence d'acquisition $\omega_s/(2\pi) = 20$ Hz. L'objet est un actuateur piézoélectrique présentant une oscillation hors plan de fréquence $\omega/(2\pi) = 10$ kHz. Une tension variable comprise entre $10^{-2}$ V et 10 V est appliquée à l'actuateur piézoélectrique pour faire varier l'amplitude de vibration. Pour chaque tension, une série de 256 interférogrammes $I_p$ est acquise par la caméra CCD puis traitée selon la méthode décrite ci-dessus.

Les figures 3A et 3B illustrent les spectres en fréquences de l'onde signal et de l'onde de référence (oscillateur local). Sur la figure 3A, on observe la composante non décalée $|\varepsilon_0|$ de l'onde signal (ramenée à la fréquence 0) et les bandes latérales $|\varepsilon_1|$ et $|\varepsilon_{-1}|$ aux fréquences $+\omega$ et $-\omega$ respectivement. Sur la figure 3B, on observe les bandes latérales de l'oscillateur local, respectivement $|\varepsilon_{LO1}|$ et $|\varepsilon_{LO2}|$, correspondant respectivement à des décalages par rapport à la fréquence $\omega_L$ de l'onde d'émission laser de $\delta_1 = \omega_s/4$ et $\delta_2 = \omega - \omega_s/4$.

Chaque interférogramme $I_p$ formé dans le plan du détecteur présente une expression donnée par l'équation (3) ci-dessus. Lors de la détection, seules les composantes fréquentielles comprises entre $\pm\, \omega_s/2$ sont visibles par le détecteur. Dans l'exemple ci-dessus, le détecteur enregistre la composante non décalée $|\varepsilon_0|$ et la première composante décalée $|\varepsilon_1|$ de l'onde signal modulée par la vibration de l'objet simultanément, grâce à la transposition des fréquences de l'onde signal $W_s$ dans la bande passante temporelle du détecteur au moyen de l'onde de référence $W_{LO}$. Ainsi, sur la figure 3C l'amplitude de la raie A est proportionnelle à $\left| \varepsilon^*_{LO2} \varepsilon_1 \right|$ et l'amplitude de la raie B est proportionnelle à $\left| \varepsilon^*_{LO1} \varepsilon_0 \right|$, la raie C correspondant à la contribution statique au spectre des battements. Les trois contributions A, B et C se trouvent à l'intérieur de la bande passante temporelle $\omega_s$ du détecteur, les autres contributions de l'équation (3) ne sont pas détectées.

Pour $z < \lambda$ et en utilisant les équations (2) et (5), il est possible de calculer l'amplitude de vibration z de l'objet à partir de la relation

$$z \approx \frac{\lambda}{2\pi}\frac{\alpha}{\beta}\frac{\left|\tilde{H}(\omega s/4)\right|}{\left|\tilde{H}(-\omega s/4)\right|} \, , \qquad (6)$$

où $\alpha$ et $\beta$ sont les contributions respectives des composantes à $\omega_s/4$ et - $\omega_s/4$ de l'oscillateur local et $\tilde{H}(\omega_s/4)$ et $\tilde{H}(-\omega_s/4)$ sont données respectivement, selon l'équation (5), par l'amplitude des raies A et B sur la figure 3C. Ainsi, selon l'équation (6), il est possible d'accéder à l'amplitude z de vibration de l'objet en calculant le rapport entre l'amplitude des raies A et B. Avantageusement, le rapport des amplitudes complexes $\omega_0$ et $\varepsilon_1$ est moyenné spatialement sur l'ensemble de l'image de l'objet.

Pour un objet soumis à une excitation forcée sinusoïdale de fréquence donnée $\omega$, le rapport entre l'amplitude des raies A et B donne également accès au retard de phase mécanique $\psi$ de la vibration par rapport au signal d'excitation, en tenant compte des équations (1) et (5),

$$\psi - \psi_0 = \arg\left(\frac{\tilde{H}(\omega s/4)}{\tilde{H}(-\omega s/4)}\right), \qquad (7)$$

où $\psi_0$ est une phase constante de référence.

La déposante a montré que l'acquisition simultanée des amplitudes des bandes latérales représentées par les raies A et B sur la figure 3C permettait un excellent rapport signal sur bruit dans la mesure de l'amplitude et de la phase de la vibration. Le rapport signal sur bruit peut être encore amélioré en procédant à une moyenne spatiale sur le champ spatial de mesure ou une partie du champ spatial de mesure, du rapport des amplitudes des raies mesurées.

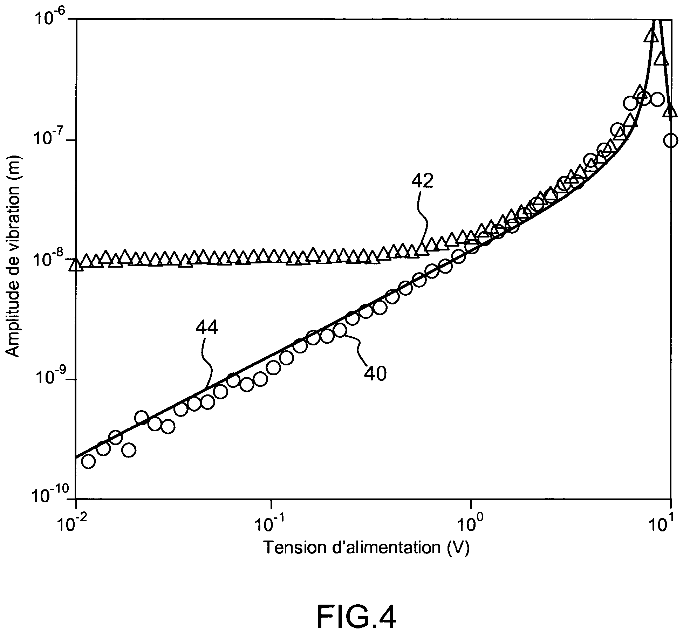

La figure 4 montre, selon l'exemple de réalisation ci-dessus, des résultats de mesure de l'amplitude z de vibration de l'actuateur piézoélectrique lorsque la tension d'alimentation de l'actuateur varie. Plus précisément, les points 40 représentent les valeurs d'amplitude de vibration en mètres (m) mesurés avec la méthode utilisant l'oscillateur local dual telle que décrite ci-dessus, en fonction de la tension d'alimentation en Volts (V) de l'actuateur piézoélectrique. A titre de comparaison, le diagramme montre également le résultat de mesures de l'amplitude de vibration 42 effectuées selon une méthode de l'art antérieur, dans laquelle la composante non décalée et la première composante décalée de l'onde signal ont été enregistrées de manière séquentielle, avec les autres conditions de mesure égales à celles de la méthode selon l'invention (même objet, décalages de fréquence $\delta_1$ et $\delta_2$, tensions d'alimentation). La méthode selon la présente invention permet d'accéder à des amplitudes de vibration de l'objet de l'ordre de l'Angström ($10^{-10}$ m), alors que l'amplitude minimale accessible par la méthode de l'art antérieur est de l'ordre de 10 nm ($10^{-8}$ m). Pour la méthode selon l'invention, des points de mesure expérimentaux 40 ainsi que le résultat du calcul théorique (trait continu 44) utilisant l'équation (6) sont représentés.

L'utilisation d'au moins deux fréquences décalées pour l'onde de référence $W_{LO}$ permet d'obtenir un accord de phase parfait, en chaque point, entre l'hologramme correspondant à la composante non décalée en fréquence $\varepsilon_0$ et l'hologramme correspondant à la composante décalée en fréquence $\varepsilon_{\pm 1}$. Grâce à cet accord de phase, le rapport signal sur bruit peut être augmenté par rapport à une mesure de z utilisant deux décalages séquentiels de fréquences, et des vibrations de l'objet de très faible amplitude sont accessibles à la mesure.

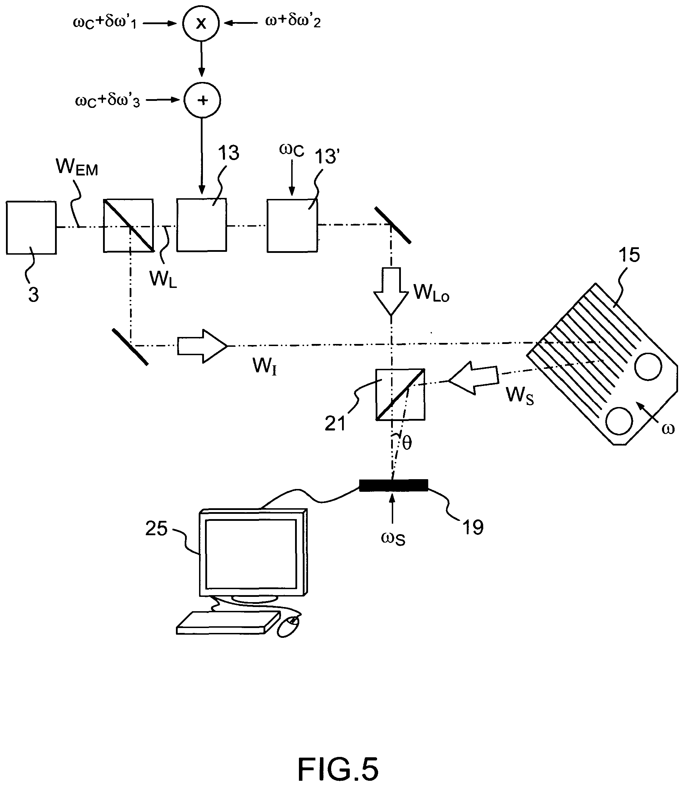

La déposante a montré expérimentalement la faisabilité d'une cartographie spatiale de l'amplitude de vibration et de la phase de vibration, avec une excellente précision. Le montage expérimental est représenté sur la figure 5. Pour cette expérience, l'objet utilisé est un lamellophone à lamelles métalliques dont les lamelles présentent des fréquences de résonance différentes les unes des autres, fonction notamment de la masse et de la longueur de chaque lamelle. Un actuateur piézoélectrique permet d'exciter les lamelles du lamellophone à une fréquence de vibration variable $\omega$. Les éléments utilisés pour le montage expérimental de la figure 5 peuvent être sensiblement identiques à ceux décrits en référence à la figure 1. Dans cet exemple cependant, pour gagner en rapport signal sur bruit, l'onde de référence $W_{LO}$ (oscillateur local) présente trois fréquences de décalage $\omega_1$, $\omega_2$ et $\omega_3$ décalées de la fréquence d'émission $\omega_L$ respectivement d'une quantité $\delta_1$, $\delta_2$ et $\delta_3$, les décalages en fréquence étant choisis pour permettre une démodulation des interférogrammes dans la bande spectrale temporelle $\omega_s$ du détecteur, par exemple une caméra CCD. Par exemple, $\delta_n = (n - 2)\omega - \omega_s\gamma_n$, avec $\omega_s$ la fréquence d'acquisition du détecteur, n = 1, 2, 3 et $-0,5 \leq \gamma_n \leq 0,5$. Les fréquences de décalage sont obtenus par exemple au moyen de deux modulateurs acousto-optiques (13, 13') agencés pour fonctionner autour de $\omega_c/(2\pi)$ = 80 MHz et contrôlés par un synthétiseur numérique radiofréquence permettant de générer une fréquence porteuse $\omega_c$ et trois fréquences décalées $\omega_c + \delta\omega'_1$, $\omega_c + \delta\omega'_2$ et $\omega_c + \delta\omega'_3$ permettant d'obtenir les fréquences $\omega_1$, $\omega_2$ et $\omega_3$ de l'oscillateur local. De la même façon que précédemment, la caméra permet d'acquérir à sa fréquence d'acquisition $\omega_s$ une série de N interférogrammes qui sont traités de telle sorte à obtenir un spectre en fréquence des battements optiques entre l'oscillateur local et l'onde signal.

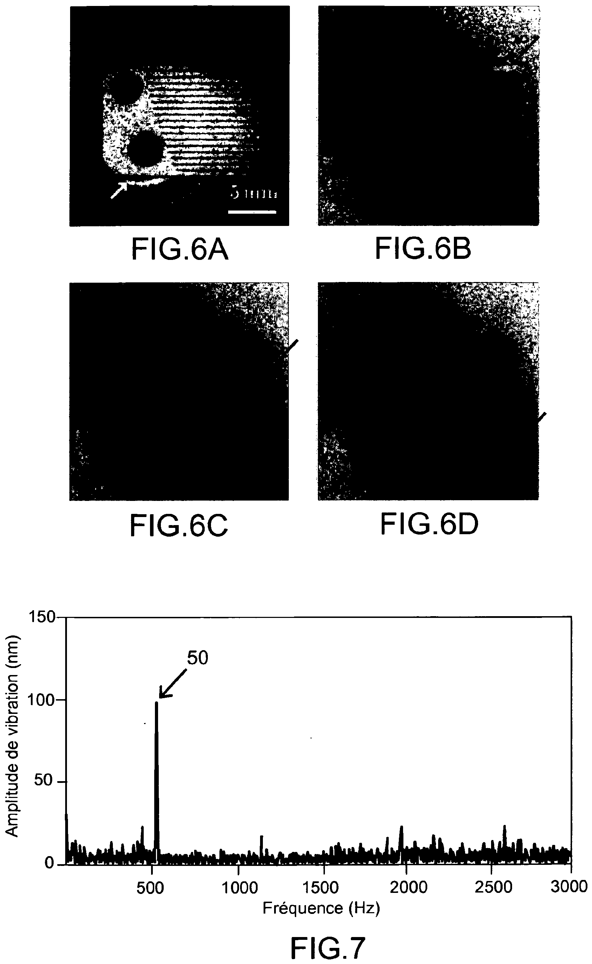

En faisant varier la fréquence d'excitation $\omega$, on met successivement en vibration chaque lamelle du lamellophone à sa fréquence de résonance. Dans cette expérience, la fréquence d'excitation $v = \omega/(2\pi)$ de l'actuateur piézoé-lectrique varie de 0 à 3 kHz, par pas de 1 Hz. 3000 séquences de $N$ = 8 interférogrammes sont acquises à une fréquence $\omega_s/(2\pi)$ = 20 Hz, et traitées selon la méthode décrite ci-dessus. Les décalages en fréquence $\gamma_1\omega_s$, $\gamma_2\omega_s$ et $\gamma_3\omega_s$ sont respectivement de - 5 Hz, - 2,5 Hz et - 7,5 Hz. Les figures 6A à 6D montrent les composantes fréquentielles des hologrammes $\tilde{H}(\omega_k)$ telles que définies par l'équation (4) ci-dessus et calculées sur l'ensemble des points de l'objet. Plus précisément, la figure 6A montre la composante non décalée $|\tilde{H}(\gamma_1\omega_s)|$ de l'hologramme du lamellophone, proportionnelle à l'amplitude de la composante non décalée $|\varepsilon_0|$ de l'onde signal. Les figures 6B à 6D représentent la composante fréquentielle $|\tilde{H}(\gamma_2\omega_s)|$ de l'hologramme du lamellophone proportionnelle à l'amplitude de la bande latérale $|\varepsilon_1|$ de l'onde signal, obtenues respectivement à trois fréquences d'excitation $\omega$ différentes, correspondant respectivement aux fréquences de résonance des lamelles indiquées par une flèche sur chacune des figures. Les fréquences d'excitation $v = \omega/(2\pi)$ sont respectivement 541 Hz, 1006 Hz et 2211 Hz pour les figures 6B, 6C et 6D. Une observation qualitative des fréquences de résonance des différentes lamelles est ainsi mise en évidence, en faisant varier la fréquence d'excitation du lamellophone et en adaptant une fréquence de décalage de l'oscillateur locale à la fréquence d'excitation.

Comme expliqué précédemment dans le cas de l'oscillateur local dual, une mesure quantitative de l'amplitude de vibration $z$ et du retard de phase $\psi$ en un point de l'objet peut alors être faite à partir des amplitudes complexes des différentes raies du spectre en fréquence des hologrammes mesurées simultanément grâce aux fréquences de décalage multiples de l'oscillateur local. Dans l'exemple de la figure 5, l'oscillateur local présente 3 fréquences de décalage et l'amplitude de vibration $z$ ainsi que le retard de phase $\psi$ peuvent se déduire de deux des trois raies $|\tilde{H}(\gamma_1\omega_s)|$, $|\tilde{H}(\gamma_2\omega_s)|$ et $|\tilde{H}(\gamma_3\omega_s)|$ du spectre en fréquence des hologrammes, ou des trois raies du spectre en fréquence des hologrammes, par exemple par les équations :

$$ z \approx \frac{\lambda}{4\pi}\left( \left|\frac{\tilde{H}(\gamma_2\omega_s)}{\tilde{H}(\gamma_1\omega_s)}\right| + \left|\frac{\tilde{H}(\gamma_3\omega_s)}{\tilde{H}(\gamma_1\omega_s)}\right| \right), \qquad (8) $$

$$ \psi - \psi_0 = \frac{1}{2}\left[ \arg\left(\frac{\tilde{H}(\gamma_2\omega_s)}{\tilde{H}(\gamma_1\omega_s)}\right) + \arg\left(\frac{\tilde{H}(\gamma_1\omega_s)}{\tilde{H}(\gamma_3\omega_s)}\right) \right], \qquad (9) $$

en tenant compte des équations (1), (2) et (5).

La figure 7 montre l'amplitude de vibration de la plus longue lamelle du lamellophone (indiquée par la flèche dans la figure 6B) en fonction de la fréquence d'excitation $v$. A la fréquence de résonance de 541 Hz de cette lamelle, l'amplitude de vibration 50 est maximale.

En augmentant le nombre de composantes de l'onde de référence et en travaillant sur des bandes de modulation d'ordre plus élevé, il est possible d'accéder à des amplitudes de vibrations plus grandes, typiquement jusqu'à 1 millimètre.

Selon une variante, pour verrouiller la phase constante $\psi_0$ d'une mesure à l'autre et déterminer avec précision le retard de phase mécanique $\psi$, une variation temporelle continue de la fréquence d'excitation (« chirp » selon l'expression anglo-saxonne) est appliquée simultanément au signal d'excitation de l'objet et à l'un des décalages en fré-quence $\delta_n$ de l'onde de référence. La variation temporelle d'excitation est par exemple linéaire et s'écrit :

$$ \omega(t) = \omega_I + (\omega_F - \omega_I)t/T, \qquad (10) $$

où $\omega_I$ est la fréquence d'excitation inférieure, $\omega_F$ est la fréquence d'excitation supérieure, et $T$ la durée de la variation.

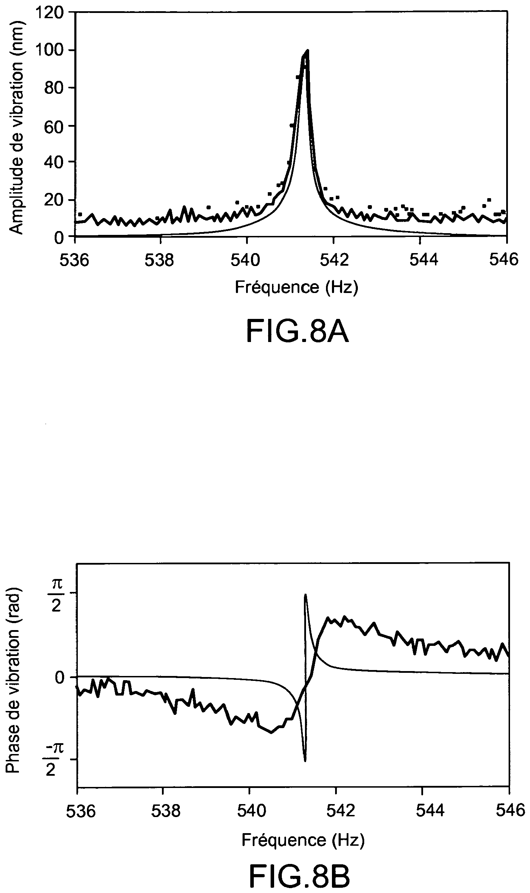

Les figures 8A et 8B montrent des résultats expérimentaux obtenus avec un montage expérimental selon l'exemple de la figure 5, tel que décrit ci-dessus. La fréquence d'excitation $v$ varie continûment entre 536 Hz et 546 Hz pendant un temps de variation $T$ = 99,2 s. Cette même variation de fréquence est appliquée à l'une des composantes de l'oscillateur local. A chaque fréquence $\omega(t)$, $N$ = 8 interférogrammes ont été acquis à une cadence de 20 Hz par la caméra CCD, et traités selon la méthode de la présente invention. L'amplitude de vibration de la lamelle la plus longue du lamellophone en fonction de la fréquence d'excitation $\nu$ est montrée sur la figure 8A, où l'amplitude de vibration est maximale à la fréquence de résonance de la lamelle considérée. La figure 8B représente le déphasage $\psi - \psi_0$ en fonction de la fréquence d'excitation. La courbe met en évidence un saut de phase de $\pi$ à la fréquence de résonance.

Bien que décrite essentiellement à travers des exemples mettant en oeuvre une excitation forcée de l'objet, la présente invention s'applique également à l'étude de la vibration et plus particulièrement des fréquences de résonance d'objets présentant des spectres de vibration, par exemple dans le cadre de contrôle non destructif. Les mesures précises de l'amplitude de vibration et du retard de phase telles que décrites précédemment pourront permettre d'analyser avec précision notamment les résonances de l'objet.

Bien que décrite à travers un certain nombre d'exemples de réalisation détaillés, la méthode et le dispositif d'holographie hétérodyne hors-axe selon l'invention comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent.

**Revendications**

1.    Méthode d'holographie numérique pour détecter l'amplitude z de vibration d'un objet (15) à au moins une fréquence de vibration $\omega$, comprenant :

   - la génération d'une onde laser de fréquence $\omega_1$ d'illumination de l'objet ($W_I$) et d'une onde de référence ($W_{LO}$) cohérente avec l'onde d'illumination ($W_I$);
   - l'acquisition au moyen d'un détecteur optoélectronique bidimensionnel (19) de bande passante temporelle $\omega_s$ d'une série d'interférogrammes résultant de l'interférence de l'onde de référence ($W_{LO}$) et d'une onde signal ($W_S$) issue de l'objet (15), les ondes signal et de référence ($W_S$, $W_{LO}$) présentant un décalage angulaire ($\theta$), le champ de l'onde de référence comprenant une première composante ($E_{LOI}$) de fréquence $\omega_1$ et au moins une deuxième composante ($E_{LO2}$), de fréquence $\omega_2$, les fréquences $\omega_1$ et $\omega_2$ étant décalées de la fréquence $\omega_1$ de l'onde laser respectivement d'une quantité déterminée $\delta_1$, $\delta_2$, avec $\delta_1 = \gamma_1 \omega_s$ et $\delta_2 = q\omega + \gamma_2 \omega_s$, où $q$ entier relatif et $-0,5 \leq \gamma_1, \gamma_2 \leq 0,5$ ; et
   - le traitement des interférogrammes comprenant :
   - le calcul d'un hologramme de l'objet à partir de chaque interférogramme, l'hologramme étant défini par l'amplitude complexe de l'onde signal dans un champ spatial donné d'un plan de l'objet ;
   - le calcul de la transformée de Fourier temps- fréquence des amplitudes complexes desdits hologrammes, permettant d'obtenir en chaque point du champ spatial un spectre en fréquence des battements optiques entre les composantes fréquentielles de l'onde de référence et de l'onde signal, le spectre de battements optiques comprenant au moins deux raies (A, B) pour des fréquences égales aux décalages de fréquence $\delta_1$ et $\delta_2$ ; et
   - le calcul pour chaque point du champ spatial à partir du rapport des amplitudes de la première raie (A, B) et de la deuxième raie (A, B), de l'amplitude z de la vibration de l'objet (15).

2.    Méthode selon la revendication 1, dans laquelle les normes de $\gamma_1$, et $\gamma_2$ sont différentes.

3.    Méthode selon l'une des revendications 1 et 2, comprenant :

   - l'émission d'une onde laser ($W_{EM}$) de fréquence $\omega_L$; et
   - la séparation de l'onde d'émission laser ($W_{EM}$) pour former l'onde d'illumination de l'objet ($W_I$) et une deuxième onde ($W_L$) envoyée vers un dispositif optoélectronique de décalage de fréquence optique (13, 13') pour former l'onde de référence ($W_{LO}$).

4.    Méthode selon l'une quelconque des revendications précédentes, comprenant l'excitation forcée de l'objet (15) à ladite fréquence $\omega$.

5.    Méthode selon la revendication 4, dans laquelle la fréquence d'excitation de l'objet est variable temporellement de façon continue entre une fréquence d'excitation inférieure $\omega_I$ et une fréquence d'excitation supérieure $\omega_F$ pendant une durée (T) donnée, et dans laquelle l'acquisition et le traitement des interférogrammes sont effectuées pendant ladite durée.

6.    Méthode selon l'une des revendications 4 ou 5, comprenant en outre le calcul du retard de phase entre la phase de vibration de l'objet et la phase du signal d'excitation à partir du rapport des amplitudes de la première raie (A, B) et de la deuxième raie (A, B).

7. Méthode selon l'une quelconque des revendications 1 à 3, dans laquelle :

  - la vibration de l'objet (15) présente un spectre de fréquences ; et
  - l'acquisition et le traitement des interférogrammes sont effectuées pour obtenir l'amplitude z de vibration de l'objet à au moins une fréquence de vibration $\omega$ contenu dans le spectre.

8. Méthode selon l'une quelconque des revendications précédentes, dans laquelle le champ de l'onde de référence $(W_{LO})$ comprend au moins une troisième composante $E_{LO3}$ de fréquence $\omega_3$, la fréquence $\omega_3$ étant décalée de la fréquence $\omega_L$ de l'onde laser d'une quantité déterminée $\delta_3 = \gamma_3\omega_s + q\omega$, où $q$ entier relatif et $- 0,5 \leq \gamma_3 \leq 0,5$.

9. Méthode selon l'une quelconque des revendications précédentes, dans laquelle $q = 1$.

10. Dispositif d'holographie numérique pour détecter l'amplitude z de vibration d'un objet (15) à une fréquence de vibration $\omega$, comprenant :

  - un détecteur optoélectronique bidimensionnel (19) de bande passante temporelle $\omega_s$;
  - des moyens de génération de deux ondes laser (3, 7) cohérentes entre elles, une onde laser d'illumination de l'objet $(W_I)$ de fréquence $\omega_L$ et une onde de référence $(W_{LO})$, le champ de l'onde de référence $(W_{LO})$ présentant au moins une première et une deuxième composantes $(E_{LO1}, E_{LO2})$ de fréquences $\omega_1, \omega_2$ décalées de la fréquence $\omega_L$ de l'onde laser respectivement d'une quantité déterminée $\delta_1, \delta_2$, avec $\delta_1 = \gamma_1\omega_s$ et $\delta_2 = q\omega + \gamma_2\omega_s$, où $q$ entier relatif et $- 0,5 \leq \gamma_1, \gamma_2 \leq 0,5$ ;
  - des moyens de combinaison (21) de l'onde de référence $(W_{LO})$ et d'une onde signal $(W_S)$ issue de l'objet (15) sur le détecteur optoélectronique bidimensionnel (19), les ondes de référence et signal $(W_{LO}, W_S)$ présentant un décalage angulaire $(\theta)$, l'acquisition du signal d'interférence des ondes signal et de référence $(W_{LO}, W_S)$ par le détecteur optoélectronique bidimensionnel (19) résultant en une série d'interférogrammes; et
  - des moyens de traitement (23) des interférogrammes comprenant :
  - des moyens de calcul d'hologrammes de l'objet obtenus à partir de chacun des interférogrammes, un hologramme étant défini par l'amplitude complexe de l'onde signal (Ws) dans un champ spatial donné d'un plan de l'objet (15);
  - des moyens pour calculer la transformée de Fourier temps - fréquence des amplitudes complexes desdits hologrammes, permettant d'obtenir en chaque point du champ spatial un spectre en fréquence des battements optiques entre les composantes fréquentielles de l'onde de référence $(W_{LO})$ et de l'onde signal $(W_S)$, le spectre de battements optiques comprenant au moins deux raies (A, B) pour des fréquences égales aux décalages de fréquence $\delta_1$ et $\delta_2$ ; et
  - des moyens pour calculer en chaque point du champ spatial à partir des amplitudes de la première raie (A, B) et de la deuxième raie (A, B) l'amplitude z de la vibration de l'objet (15).

11. Dispositif d'holographie numérique selon la revendication 10, comprenant

  - une source d'émission laser (3) à la fréquence $\omega_L$;
  - des moyens de séparation (7) de l'onde d'émission $(W_{EM})$ laser pour former l'onde d'illumination de l'objet $(W_I)$ et une seconde onde $(W_L)$ ;
  - un dispositif optoélectronique de décalage de fréquence optique (13, 13'), destiné à recevoir ladite seconde onde $(W_L)$ pour former l'onde de référence $(W_{LO})$.

12. Dispositif d'holographie numérique selon la revendication 11, dans lequel le dispositif optoélectronique de décalage de fréquence optique (13, 13') comprend deux modulateurs acousto-optiques travaillant à des fréquences prédéterminées sur des ordres de diffraction opposés pour former ladite onde de référence $(W_{LO})$.

13. Dispositif holographique selon la revendication 11, dans lequel le dispositif optoélectronique de décalage de fréquence optique (13) comprend une cellule de Pockels.

14. Dispositif holographique selon l'une des revendications 11 à 13, dans lequel les moyens de séparation (7) de l'onde laser sont fibrés.

15. Dispositif holographique selon l'une quelconque des revendications 10 à 14, comprenant en outre un moyen d'excitation de l'objet (15) à la fréquence ω de vibration donnée.

16. Dispositif holographique selon l'une quelconque des revendications 10 à 15, dans lequel le détecteur optoélectronique bidimensionnel (19) est une caméra de type CCD ou CMOS.

**Patentansprüche**

1. Digitales Holographie-Verfahren zum Detektieren der Amplitude z der Vibration eines Objekts (15) bei mindestens einer Vibrationsfrequenz co, umfassend:

- das Erzeugen einer Laserwelle der Frequenz $\omega_L$ zur Beleuchtung des Objekts ($W_I$) und einer Referenzwelle ($W_{LO}$), die zu der Beleuchtungswelle ($W_I$) kohärent ist,
- das Erfassen mittels eines zweidimensionalen optoelektronischen Sensors (19) der zeitlichen Bandbreite $\omega_S$ einer Reihe von Interferogrammen, die aus der Interferenz der Referenzwelle ($W_{LO}$), und einer von dem Objekt (15) stammenden Signalwelle ($W_S$) resultieren, wobei die Signalwelle und die Referenzwelle ($W_S$, $W_{LO}$) einen Winkelversatz ($\theta$) aufweisen, wobei das Feld der Referenzwelle eine erste Komponente ($E_{LO1}$) der Frequenz $\omega_1$ und mindestens eine zweite Komponente ($E_{LO2}$) der Frequenz $\omega_2$ enthält, wobei die Frequenzen $\omega_1$ und $\omega_2$ von der Frequenz $\omega_L$ der Laserwelle um einen bestimmten Betrag $\delta_1$, $\delta_2$ verschoben sind, mit $\delta_1 = \gamma_1\omega_S$ und $\delta_2 = q\omega + \gamma_2\omega_S$, wobei $q$ eine ganze Zahl und $-0,5 \leq \gamma_1, \gamma_2 \leq 0,5$ ist; und
- das Auswerten der Interferogramme, umfassend:
- das Berechnen eines Hologramms des Objekts ausgehend von jedem Interferogramm, wobei das Hologramm durch die komplexe Amplitude der Signalwelle in einem vorgegebenen räumlichen Feld einer Ebene des Objekts definiert ist,
- das Berechnen der Zeit-Frequenz-Fourier-Transformierten der komplexen Amplituden der Hologramme, um in jedem Punkt des räumlichen Feldes ein Frequenzspektrum der optischen Schwebungen zwischen den Frequenzkomponenten der Referenzwelle und der Signalwelle zu erhalten, wobei das Spektrum der optischen Schwebungen bei Frequenzen, die gleich den Frequenzverschiebungen $\delta_1$ und $\delta_2$ sind, mindestens zwei Linien (A, B) enthält, und
- das Berechnen für jeden Punkt des räumlichen Feldes ausgehend von dem Verhältnis der Amplituden der ersten Linie (A, B) und der zweiten Linie (A, B) der Amplitude z der Vibration des Objekts (15).

2. Verfahren nach Anspruch 1, bei dem die Normen von $\gamma_1$ und $\gamma_2$ unterschiedlich sind.

3. Verfahren nach einem der Ansprüche 1 und 2, umfassend:

- das Emittieren einer Laserwelle ($W_{EM}$) der Frequenz $\omega$, und
- das Aufteilen der Laseremissionswelle ($W_{EM}$), um die Welle zum Beleuchten des Objekts ($W_I$) und eine zweite Welle ($W_L$), die zu einer optoelektronischen Vorrichtung für die optische Frequenzverschiebung (13, 13') gesendet wird, zu bilden, um die Referenzwelle ($W_{LO}$) zu bilden.

4. Verfahren nach einem der vorhergehenden Ansprüche, umfassend die Zwangserregung des Objekts (15) bei der Frequenz co.

5. Verfahren nach Anspruch 4, bei dem die Frequenz zum Erregen des Objekts kontinuierlich zeitlich variabel ist zwischen einer unteren Erregerfrequenz $\omega_I$ und einer oberen Erregerfrequenz $\omega_F$ über einen gegebenen Zeitraum (T) und bei dem das Erfassen und das Auswerten der Interferogramme während des Zeitraums durchgeführt werden.

6. Verfahren nach einem der Ansprüche 4 oder 5, ferner umfassend das Berechnen der Phasenverzögerung zwischen der Vibrationsphase des Objekts und der Phase des Erregersignals ausgehend von dem Verhältnis der Amplituden der ersten Linie (A, B) und der zweiten Linie (A, B).

7. Verfahren nach einem der Ansprüche 1 bis 3, bei dem

- die Vibration des Objekts (15) ein Frequenzspektrum aufweist; und
- das Erfassen und das Auswerten der Interferogramme durchgeführt werden, um die Amplitude z der Vibration des Objekts bei mindestens einer Vibrationsfrequenz co zu erhalten, die in dem Spektrum enthalten ist.

**8.** Verfahren nach einem der vorhergehenden Ansprüche, bei dem das Feld der Referenzwelle ($W_{LO}$) mindestens eine dritte Komponente ($E_{LO3}$) der Frequenz $\omega_3$ enthält, wobei die Frequenz $\omega_3$ von der Frequenz $\omega_L$ der Laserwelle um einen bestimmten Betrag $\delta_3 = \gamma_3\omega_S + q\omega$ verschoben ist, wobei $q$ eine ganze Zahl und $-0,5 \leq \gamma_3 \leq 0,5$ ist.

**9.** Verfahren nach einem der vorhergehenden Ansprüche, bei dem $q = 1$ ist.

**10.** Digitale Holographie-Vorrichtung zum Detektieren der Amplitude z der Vibration eines Objekts (15) bei einer Vibrationsfrequenz $\omega$, umfassend:

- einen zweidimensionalen optoelektronischen Sensor (19) der zeitlichen Bandbreite $\omega_S$,
- Mittel zum Erzeugen von zwei Laserwellen (3, 8), die zueinander kohärent sind, einer Laserwelle zur Beleuchtung des Objekts ($W_I$) der Frequenz $\omega_L$ und einer Referenzwelle ($W_{LO}$), wobei das Feld der Referenzwelle ($W_{LO}$) mindestens eine erste und eine zweite Komponente ($E_{LO1}$, $E_{LO2}$) der Frequenzen $\omega_1$, $\omega_2$ aufweist, die von der Frequenz $\omega_L$ der Laserwelle um einen bestimmten Betrag $\delta_1$, $\delta_2$ verschoben sind, mit $\delta_1 = \gamma_1\omega_S$ und $\delta_2 = q\omega + \gamma_2\omega_S$, wobei $q$ eine ganze Zahl und $-0,5 \leq \gamma_1, \gamma_2 \leq 0,5$ ist;
- Mittel zum Kombinieren (21) der Referenzwelle ($W_{LO}$) und einer von dem Objekt (15) stammenden Signalwelle $W_S$ an dem zweidimensionalen optoelektronischen Sensor (19), wobei die Referenzwelle und die Signalwelle ($W_{LO}$, $W_S$) einen Winkelversatz ($\theta$) aufweisen, wobei das Erfassen des Interferenzsignals der Signalwelle und der Referenzwelle ($W_{LO}$, $W_S$) durch den zweidimensionalen optoelektronischen Sensor (19) in einer Reihe von Interferogrammen resultiert; und
- Mittel zum Auswerten (23) der Interferogramme, umfassend:
- Mittel zum Berechnen von Hologrammen des Objekts, die ausgehend von jedem der Interferogramme erhalten werden, wobei ein Hologramm durch die komplexe Amplitude der Signalwelle ($W_S$) in einem vorgegebenen räumlichen Feld einer Ebene des Objekts (15) definiert ist,
- Mittel zum Berechnen der Zeit-Frequenz-Fourier-Transformierten der komplexen Amplituden der Hologramme, um in jedem Punkt des räumlichen Feldes ein Frequenzspektrum der optischen Schwebungen zwischen den Frequenzkomponenten der Referenzwelle ($W_{LO}$) und der Signalwelle ($W_S$) zu erhalten, wobei das Spektrum der optischen Schwebungen bei Frequenzen, die gleich den Frequenzverschiebungen $\delta_1$ und $\delta_2$ sind, mindestens zwei Linien (A, B) enthält; und
- Mittel zum Berechnen in jedem Punkt des räumlichen Feldes ausgehend von den Amplituden der ersten Linie (A, B) und der zweiten Linie (A, B) der Amplitude z der Vibration des Objekts (15).

**11.** Digitale Holographie-Vorrichtung nach Anspruch 10, umfassend:

- eine Quelle für Laser-Emission (3) bei der Frequenz $\omega_L$;
- Mittel zum Aufteilen (7) der Laseremissionswelle ($W_{EM}$), um die Welle zum Beleuchten des Objekts ($W_I$) und eine zweite Welle ($W_L$) zu bilden,
- eine optoelektronische Vorrichtung für die optische Frequenzverschiebung (13, 13'), die zum Empfangen der zweiten Welle ($W_L$) bestimmt ist, um die Referenzwelle ($W_{LO}$) zu bilden.

**12.** Digitale Holographie-Vorrichtung nach Anspruch 11, wobei die optoelektronische Vorrichtung für die optische Frequenzverschiebung (13, 13') zwei akusto-optische Modulatoren umfasst, die bei vorbestimmten Frequenzen in entgegengesetzten Beugungsordnungen arbeiten, um die Referenzwelle ($W_{LO}$) zu bilden.

**13.** Holographie-Vorrichtung nach Anspruch 11, wobei die optoelektronische Vorrichtung für die optische Frequenzverschiebung (13) eine Pockelszelle umfasst.

**14.** Holographie-Vorrichtung nach einem der Ansprüche 11 bis 13, wobei die Mittel zum Aufteilen (7) der Laserwelle gefasert sind.

**15.** Holographie-Vorrichtung nach einem der Ansprüche 10 bis 14, ferner umfassend ein Mittel zum Erregen des Objekts (15) bei der Frequenz co einer gegebenen Vibration.

**16.** Holographie-Vorrichtung nach einem der Ansprüche 10 bis 15, wobei der zweidimensionale optoelektronische Sensor (19) eine Kamera des CCD- oder CMOS-Typs ist.

**Claims**

1. A digital holography method for detecting the amplitude z of vibration of an object (15) at at least one vibration frequency $\omega$, comprising:

   - the generation of an object illumination laser wave ($W_I$) of frequency $\omega_L$ and of a reference wave ($W_{LO}$) coherent with the illumination wave ($W_I$);
   - the acquisition, by means of a two-dimensional optoelectronic detector (19) of temporal bandwidth $\omega_s$, of a set of interferograms resulting from the interference of the reference wave ($W_{LO}$) and of a signal wave ($W_S$) from the object (15), the signal and reference waves ($W_S$, $W_{LO}$) exhibiting an angular shift ($\theta$), the field of the reference wave comprising a first component ($E_{LO1}$) of frequency $\omega_1$ and at least one second component ($E_{LO2}$), of frequency $\omega_2$, the frequencies $\omega_1$ and $\omega_2$ being offset from the frequency $\omega_L$ of the laser wave respectively by a determined quantity $\delta_1$, $\delta_2$, with $\delta_1 = \gamma_1\omega_S$ and $\delta_2 = q\omega + \gamma_2\omega_S$, where $q$ is a relative integer and $-0.5 \le \gamma_1$, $\gamma_2 \le 0.5$; and
   - the processing of the interferograms comprising:
   - the calculation of a hologram of the object from each interferogram, the hologram being defined by the complex amplitude of the signal wave in a given spatial field of a plane of the object;
   - the calculation of the time-frequency Fourier transform of the complex amplitudes of said holograms, making it possible to obtain, at each point of the spatial field, a frequency spectrum of the optical beats between the frequency components of the reference wave and of the signal wave, the optical beats spectrum comprising at least two bands (A, B) for frequencies equal to the frequency offsets $\delta_1$ and $\delta_2$; and
   - the calculation, for each point of the spatial field from the ratio of the amplitudes of the first band (A, B) and of the second band (A, B), of the amplitude z of the vibration of the object (15).

2. The method as claimed in claim 1, wherein the norms of $\gamma_1$ and $\gamma_2$ are different.

3. The method as claimed in one of claims 1 and 2, comprising:

   - the emission of a laser wave ($W_{EM}$) of frequency $\omega_L$; and
   - the separation of the laser emission wave ($W_{EM}$) to form the object illumination wave ($W_I$) and a second wave ($W_L$) sent to an optical frequency shift optoelectronic device (13, 13') to form the reference wave ($W_{LO}$).

4. The method as claimed in any one of the preceding claims, comprising the forced excitation of the object (15) at said frequency $\omega$.

5. The method as claimed in claim 4, wherein the excitation frequency of the object is temporally variable in a continuous manner between a lower excitation frequency $\omega_I$ and an upper excitation frequency $\omega_F$ for a given time (T), and in which the acquisition and the processing of the interferograms are performed during said time.

6. The method as claimed in one of claims 4 and 5, further comprising the calculation of the phase delay between the vibration phase of the object and the phase of the excitation signal from the ratio of the amplitudes of the first band (A, B) and of the second band (A, B).

7. The method as claimed in any one of claims 1 to 3, wherein:

   - the vibration of the object (15) exhibits a frequency spectrum; and
   - the acquisition and the processing of the interferograms are performed to obtain the amplitude z of vibration of the object at at least one vibration frequency $\omega$ contained in the spectrum.

8. The method as claimed in any one of the preceding claims, wherein the field of the reference wave ($W_{LO}$) comprises at least one third component $E_{LO3}$ of frequency $\omega_3$, the frequency $\omega_3$ being offset from the frequency $\omega_L$ of the laser wave by a determined quantity $\delta_3 = \gamma_3\omega_s + q\omega$, where $q$ is a relative integer and $-0.5 \le \gamma_3 \le 0.5$.

9. The method as claimed in any one of the preceding claims, in which $q = 1$.

10. A digital holography device for detecting the amplitude z of vibration of an object (15) at a vibration frequency $\omega$, comprising:

- a two-dimensional optoelectronic detector (19) of temporal bandwidth $\omega_s$;
- means for generating two mutually coherent laser waves (3, 7), an object illumination laser wave ($W_I$) of frequency $\omega_L$ and a reference wave ($W_{LO}$), the field of the reference wave ($W_{LO}$) exhibiting at least one first and one second components ($E_{LO1}$, $E_{LO2}$) of frequencies $\omega_1$, $\omega_2$ offset from the frequency $\omega_L$ of the laser wave respectively by a determined quantity $\delta_1$, $\delta_2$, with $\delta_1 = \gamma_1\omega_s$ and $\delta_2 = q\omega + \gamma_2\omega_s$, where $q$ is a relative integer and $- 0.5 \leq \gamma_1, \gamma_2 \leq 0.5$;
- means for combining (21) the reference wave ($W_{LO}$) and a signal wave ($W_S$) from the object (15) on the two-dimensional optoelectronic detector (19), the reference and signal waves ($W_{LO}$, $W_S$) exhibiting an angular shift ($\theta$), the acquisition of the interference signal of the signal and reference waves ($W_{LO}$, $W_S$) by the two-dimensional optoelectronic detector (19) resulting in a set of interferograms; and
- means (23) for processing the interferograms comprising:
- means for calculating holograms of the object obtained from each of the interferograms, a hologram being defined by the complex amplitude of the signal wave ($W_S$) in a given spatial field of a plane of the object (15);
- means for calculating the time-frequency Fourier transform of the complex amplitudes of said holograms, making it possible to obtain, at each point of the spatial field, a frequency spectrum of the optical beats between the frequency components of the reference wave ($W_{LO}$) and of the signal wave ($W_S$), the optical beats spectrum comprising at least two bands (A, B) for frequencies equal to the frequency offsets $\delta_1$ and $\delta_2$; and
- means for calculating, at each point of the spatial field from the amplitudes of the first band (A, B) and of the second band (A, B), the amplitude z of the vibration of the object (15).

11. The digital holography device as claimed in claim 10, comprising:

- a laser emission source (3) at the frequency $\omega_L$;
- means (7) for splitting the laser emission wave ($W_{EM}$) to form the object illumination wave ($W_I$) and a second wave ($W_L$);
- an optical frequency shift optoelectronic device (13, 13'), intended to receive said second wave ($W_L$) to form the reference wave ($W_{LO}$).

12. The digital holography device as claimed in claim 11, wherein the optical frequency shift optoelectronic device (13, 13') comprises two acousto-optical modulators working at predetermined frequencies on opposite orders of diffraction to form said reference wave ($W_{LO}$).

13. The holographic device as claimed in claim 11, wherein the optical frequency shift optoelectronic device (13) comprises a Pockels cell.

14. The holographic device as claimed in one of claims 11 to 13, wherein the laser wave separation means (7) are fibered.

15. The holographic device as claimed in any one of claims 10 to 14, further comprising a means for exciting the object (15) at the given vibration frequency $\omega$.

16. The holographic device as claimed in any one of claims 10 to 15, wherein the two-dimensional optoelectronic detector (19) is a camera of CCD or CMOS type.

FIG.1

acquisition

reconstruction
des
hologrammes

stockage

$\tilde{I}_p$

$H_p$

$N$

$I_P$

$H_p$

250

$H_p$

25

transformée
de Fourier
temps-fréquence

$\tilde{H}_{(\omega_k)}$

250

affichage

$|\tilde{H}_{(\omega_k)}|$

# FIG.2A    FIG.2B    FIG.2C

FIG.3A

FIG.3B

FIG.3C

FIG.4

$\omega_C + \delta\omega'_1 \longrightarrow$ (×) $\longleftarrow \omega + \delta\omega'_2$

$\omega_C + \delta\omega'_3 \longrightarrow$ (+)

FIG.5

FIG.6A

FIG.6B

FIG.6C

FIG.6D

FIG.7

FIG.8A

FIG.8B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1043632 A

**Littérature non-brevet citée dans la description**

- **SCHNARS ; JÜPTNER.** Direct recording of holograms by a CCD target and numerical reconstruction. *Appl. Opt.,* 1994, vol. 33, 179-181
- **M. GROSS et al.** Digital Holography with ultimate sensibility. *Optics Letters,* 2007, vol. 32
- **V LÉDL.** FREQUENCY SHIFTED DIGITAL HOLOGRAPHY FOR THE MEASUREMENT OF VIBRATION WITH SMALL AMPLITUDES. *9th International Conference on Vibration Measurements by Laser and Noncontact Techniques,* Juin 2010
- **B. SAMSON et al.** Video-rate laser Doppler vibrometry by hétérodyne holography. *optics letters,* 15 Avril 2011, vol. 26 (8), 1149-1151
- **P. PSOTA et al.** Measurement of Piezoelectric Transformer Vibrations by Digital Holography. *IEEE transactions on ultrasonics, ferroelectrics and frequency control,* Septembre 2012, vol. 59 (9